# FASCICULE DE BREVET EUROPEEN

(11) **EP 2 210 209 B1**
(45) Date de publication et mention de la délivrance du brevet: **27.09.2017**
(21) Numéro de dépôt: 08870992.8
(22) Date de dépôt: 29.10.2008
(51) Int. Cl.: G06F 21/62, G06F 21/77

(54) **PROCEDE DE GESTION DES DROITS D'ACCES DANS UNE CARTE A PUCE**
VERFAHREN ZUR VERWALTUNG VON ZUGANGSRECHTEN FÜR EINE SMART CARD
METHOD FOR MANAGING ACCESS RIGHTS IN A SMART CARD

(30) Priorité: 31.10.2007 FR 0707657
(43) Date de publication de la demande: 28.07.2010
(73) Titulaire: MORPHO, 92130 Issy-Les-Moulineaux (FR)
(72) Inventeur: PEPIN, Cyrille, F-78570 Andresy (FR); ROUDIERE, Guillaume, F-92100 Boulogne Billancourt (FR)
(74) Mandataire: Lavialle, Bruno François Stéphane
(86) Numéro de dépôt international: PCT/FR2008/001521
(87) Numéro de publication internationale: WO 2009/090350

(56) Documents cités:
- EP-A- 1 431 862
- US-B1- 6 779 113

## Description

L'invention concerne la gestion des droits d'accès à des données enregistrées dans une carte à puce.

### ARRIERE PLAN DE L'INVENTION

Une carte à puce contient typiquement de la mémoire morte réinscriptible, du type Flash ou EEPROM, un processeur ou microcontrôleur ainsi que de la mémoire volatile ou mémoire RAM.

Les droits d'accès assurent la confidentialité des données contenues dans la carte, cette confidentialité étant essentielle dans de multiples applications, comme par exemple les cartes bancaires, ou les cartes SIM utilisées dans les téléphones mobiles.

Lorsque la carte est engagée dans un appareil, l'exécution de commandes telles que lecture ou écriture de données n'est possible que si des conditions particulières sont remplies.

Ces conditions sont par exemple une authentification préalable par vérification d'un code, ou bien l'établissement d'un canal sécurisé entre le lecteur de carte et le terminal depuis lequel les commandes sont émises.

La gestion des droits d'accès, qui permet de déterminer si les conditions requises sont remplies pour exécuter une commande, est assurée par un programme d'évaluation des droits, appelé masque, préenregistré dans la mémoire de la carte, et exécuté par son processeur.

Lorsqu'une requête en exécution d'une commande telle que la lecture d'un ensemble de données est reçue, le programme d'évaluation des droits identifie d'abord les droits d'accès associés à ces données.

Ces droits mémorisés dans la carte définissent les conditions requises pour exécuter chaque commande sur les données visées : par exemple, une authentification par vérification d'un code est nécessaire pour exécuter une commande de lecture.

Le programme détermine ensuite si les conditions en question sont remplies, en consultant un registre, dit d'état de sécurité de la carte, mémorisé dans celle-ci, et dans lequel est tenue à jour une liste d'événements préalablement validés.

Ces événements sont par exemple l'authentification par vérification d'un code, l'établissement effectif d'un canal de communication sécurisé entre la carte et le terminal avec lequel elle interagit, ou autre, chaque évènement étant dans un état dit validé s'il a été accompli avec succès.

Dans la pratique, il s'avère que les programmes et architectures de gestion de droits d'accès connus ne donnent pas entièrement satisfaction.

Ceci est dû au fait que la structure générale des droits d'accès est complexe puisque chaque ensemble de données mémorisées dans la carte, par exemple chaque fichier, possède des droits d'accès qui lui sont propres.

De plus, pour un même fichier, ces droits définissent des conditions qui ne sont pas les mêmes d'une commande à l'autre.

De plus, pour une même commande à exécuter sur un même fichier, les conditions diffèrent selon que la carte communique avec un terminal par contact électrique, ou par une liaison sans fil.

La lecture d'un fichier peut nécessiter une authentification, l'écriture dans ce fichier peut nécessiter en outre l'établissement d'un canal sécurisé, et sa suppression peut nécessiter une autre authentification avec un autre code distinct du premier.

Pour un autre fichier, la lecture, l'écriture et la suppression peuvent être effectuées sans qu'aucune condition n'ait à être remplie.

Ainsi, chaque fichier possède des droits qui lui sont propres, et le système de droits d'accès peut aussi être complexe en soi puisqu'il peut faire intervenir une multitude de conditions telles que plusieurs niveaux d'authentifications par différents codes, l'établissement de canaux sécurisés, ou autre.

En outre, ces conditions sont combinables : par exemple, le droit d'écriture de données dans un fichier peut être accordé si : une authentification de premier niveau a été effectuée et un canal sécurisé a été établi ou si une authentification de second niveau a été effectuée avec succès.

Ainsi, les droits d'accès occupent un espace mémoire important dans la carte, alors que la capacité de mémoire d'une carte à puce est en soi restreinte. De plus, le temps d'exécution du programme d'évaluation des droits est pénalisé par le fait qu'il doit effectuer des lectures multiples pour déterminer si une commande peut ou non être exécutée sur un fichier donné.

Plusieurs normes, telles que les normes ISO 7816-4 ou bien ISO 7816-9 décrivent des mécanismes de gestion des droits d'accès, mais toutes présentent des lacunes : elles sont peu ouvertes, et donnent lieu à un temps d'évaluation des droits trop long.

Les documents US-6179113-B1 et EP-1431862-A2 divulguent des systèmes de gestion de droits pour carte à puces.

### OBJET DE L'INVENTION

Le but de l'invention est de proposer une architecture de gestion des droits d'accès qui permette de remédier aux inconvénients ci-dessus en offrant une compacité de l'enregistrement des données, une vitesse d'exécution élevée du programme de gestion des droits, ainsi qu'une sécurité de fonctionnement suffisante.

### RESUME DE L'INVENTION

A cet effet, l'invention a pour objet un procédé de gestion des droits d'accès associés à des données d'une carte à puce, pour subordonner l'exécution d'une commande telle qu'une commande de lecture de ces données, à la validation d'une combinaison logique de plusieurs évènements détectés par la carte, tels qu'une authentification par vérification d'un code,
dans lequel l'état de validation de chaque évènement est tenu à jour dans un registre d'état de sécurité de la carte;
dans lequel les droits d'accès d'un ensemble de données sont enregistrés dans une liste des commandes à laquelle est associée une liste d'évènements donnant pour chaque évènement qu'elle comporte un identificateur de cet évènement,
la liste de commande étant formée de couples associant chacun une commande à une combinaison logique d'évènements à valider qui est définie par les rangs dans la liste d'évènements de chacun des évènements composant cette combinaison ;
dans lequel à réception d'une requête d'exécution d'une commande sur un ensemble de données, l'autorisation ou le refus d'exécuter cette commande est établi :
- en recherchant dans la liste des commandes associée à ces données, le couple comprenant la commande requise et en refusant l'exécution en cas de recherche infructueuse ;
- et en cas de recherche fructueuse, en déterminant, à partir du registre d'état de sécurité de la carte si la combinaison d'évènements associée à la commande est ou non validée pour autoriser ou refuser l'exécution de la commande.

L'invention concerne également un procédé tel que défini ci-dessus, dans lequel chaque commande enregistrée dans la liste de commandes est codée sous forme d'un mot binaire représentatif d'un identificateur de cette commande. Il est à noter que toutes les commandes possibles ne sont pas nécessairement répertoriées dans cette liste de commandes.

L'invention concerne également un procédé tel que défini ci-dessus, dans lequel la liste d'événements comporte aussi une ou plusieurs combinaisons d'évènements, chaque combinaison y étant définie par les rangs dans la liste d'évènements de chacun des évènements composant cette combinaison, cette liste étant ordonnée de telle manière que chaque combinaison logique d'événements est située après les évènements qui la composent.

L'invention concerne également un procédé tel que défini ci-dessus, dans lequel la liste d'évènements débute par un mot binaire représentatif du nombre d'évènements et de combinaisons d'évènements que cette liste comporte, cette liste pouvant être vide.

L'invention concerne également un procédé tel que défini ci-dessus, dans lequel chaque évènement ou combinaison d'évènements enregistré dans une liste est codé sous forme d'un mot binaire débutant par un premier indicateur binaire indiquant s'il s'agit d'un évènement ou d'une combinaison logique d'évènements.

L'invention concerne également un procédé tel que défini ci-dessus, dans lequel chaque mot binaire correspondant à un évènement comprend l'identificateur de cet évènement codé en fin de mot.

L'invention concerne également un procédé tel que défini ci-dessus, dans lequel chaque mot correspondant à une combinaison logique d'évènements comprend une série d'indicateurs binaires située en fin de mot, dans laquelle chaque indicateur binaire valant "UN" indique que l'évènement ayant dans la liste d'évènements le rang qu'a cet indicateur dans la série fait partie de cette combinaison logique d'évènements.

L'invention concerne également un procédé tel que défini ci-dessus, dans lequel le second indicateur binaire de chaque mot correspondant à une combinaison logique d'évènements indique s'il s'agit d'une combinaison logique conjonctive ou bien disjonctive.

L'invention concerne également une carte à puce comprenant des moyens de mise en oeuvre du procédé ci-dessus.

### BREVE DESCRIPTION DES DESSINS

- La figure 1 est une représentation schématique d'une liste d'évènements et d'une liste de commandes associées à un ensemble de données dans le procédé selon l'invention ;
- La figure 2 est une représentation schématique d'un mot représentatif d'un évènement simple dans le procédé selon l'invention ;
- La figure 3 est une représentation schématique d'un mot représentatif d'un évènement composite dans le procédé selon l'invention.

### DESCRIPTION DETAILLEE DE L'INVENTION

L'invention s'applique notamment à une carte à puce comprenant des moyens de mémorisation, tels qu'une mémoire volatile et une mémoire non volatile ainsi qu'un processeur, et un programme de gestion de droits d'accès aux fichiers ou ensembles de données mémorisés dans cette carte.

L'idée à la base de l'invention est de définir un format d'enregistrement des droits d'accès modulable en fonction du besoin, en association avec un algorithme capable d'assurer une évaluation rapide des droits d'accès.

Une commande à exécuter sur un ensemble de données, ou fichier, est généralement subordonnée à la validation préalable d'un évènement ou d'une combinaison d'évènements, c'est à dire à la validation d'un évènement qui peut être soit simple soit composite. Ainsi, dans la suite, les évènements en tant que tels sont appelés évènements simples et les combinaisons d'évènements sont appelées évènements composites.

La validation d'un évènement simple correspond par exemple à la vérification d'un code PIN1 ou PIN2 ou d'un mot de passe, ou bien à l'établissement d'un canal de communication sécurisé.

Un évènement composite est la combinaison logique "ET" ou bien "OU", c'est-à-dire la conjonction ou la disjonction, de plusieurs évènements simples, et il peut aussi être défini comme la combinaison logique de plusieurs évènements composites se ramenant à une combinaison d'évènements simples.

Les évènements sont numérotés et gérés comme des valeurs numériques ou identificateurs, et l'état de sécurité de la carte, noté { Evtₐ, Evt_{b}, ... Evtₓ}, est la liste des évènements validés à un instant donné, elle est mémorisée et tenue à jour dans un registre de mémoire de la carte à puce.

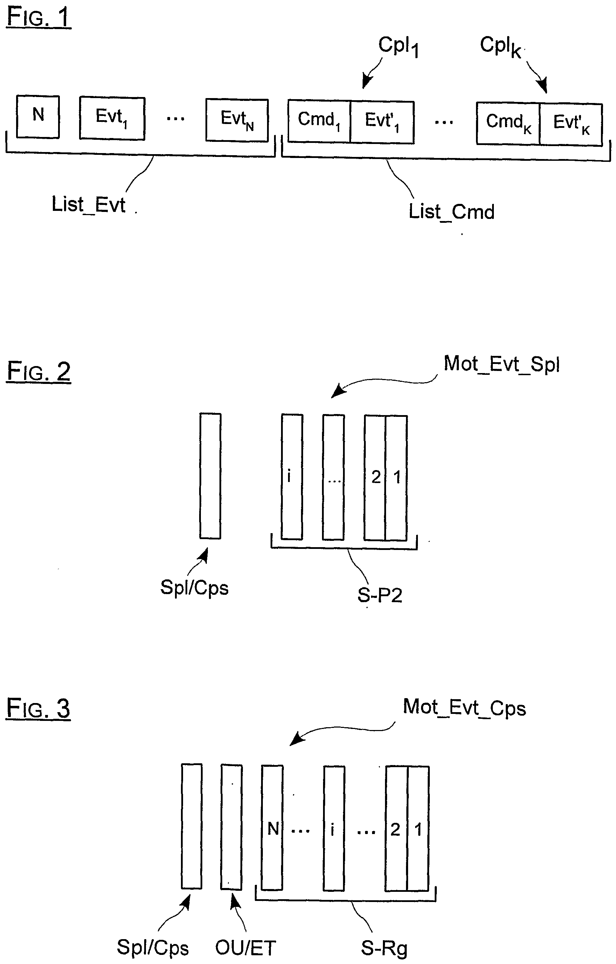

Si le système de droits d'accès ne fait intervenir que des évènements simples, le format d'enregistrement des droits d'accès comprend principalement une liste de commande, notée List_Cmd et représentée schématiquement en figure 1, qui est associée à chaque ensemble de données ou fichier.

Il s'agit d'une liste de couples ou doublons, notés Cpl₁..Cplₖ, comprenant chacun une commande et un évènement, toutes les commandes existantes n'étant pas nécessairement présentes dans cette liste.

Dans l'exemple de la figure 1, le couple Cpl₁ associe la commande Cmd₁ à l'évènement Evt₁', et le couple Cplₖ associe la commande Cmdₖ à l'évènement Evtₖ'.

Chaque évènement Evt₁'..Evtₖ' est représenté dans la liste de commande par son identificateur numérique qui permet par exemple de connaître son état par simple lecture du registre d'état de sécurité de la carte.

A réception d'une requête en exécution d'une commande notée C sur un ensemble de données, l'accord ou le refus d'exécuter cette commande est décidé en recherchant la commande C dans la liste de commande List_Cmd relative à l'ensemble de données visé.

En cas de recherche infructueuse, la commande C n'est pas exécutée. En cas de recherche fructueuse, la commande est exécutée si l'évènement associé à la commande C dans la liste List_Cmd est validé dans le registre d'état de sécurité, et elle n'est pas exécutée sinon.

Si le système de droits d'accès fait intervenir des évènements composites, on adjoint à la liste de commandes List_Cmd, une liste d'évènements, représentée schématiquement en figure 1 où elle est repérée par List_Evt.

Cette liste d'évènements est exploitée conjointement avec la liste de commandes pour définir les évènements composites :
La liste d'évènements comporte des évènements simples repérés par leurs identificateurs, et chaque évènement composite est défini dans la liste de commande par les rangs, dans la liste d'évènements, des évènements qui le composent.
La liste d'évènements peut aussi comporter des évènements composites, ce qui permet de définir des combinaisons logiques complexes, c'est à dire faisant intervenir les opérateurs "OU" et "ET". Chaque évènement composite de la liste d'évènements est alors défini par les rangs, dans cette liste d'évènements, des évènements simples ou composites qui le composent.

Ainsi, quoi qu'il en soit, chaque évènement simple intervenant dans la définition d'un événement composite apparaît nécessairement dans la liste d'évènements.

Si le système de droits fait également intervenir des évènements simples conditionnant à eux seuls l'exécution d'une commande, ces évènements simples apparaissent dans la liste de commande, de manière analogue au cas où le système de droits ne fait intervenir que des évènements simples.

Les évènements simples et les évènements composites sont codés par des mots binaires, respectivement Mot_Evt_Spl et Mot_Evt_Cps, qui ont des structures différentes.

La structure d'un mot binaire Mot_Evt_Spl correspondant à un évènement simple est représentée schématiquement en figure 2. Ce mot binaire, c'est-à-dire cet ensemble de bits ou indicateurs binaires, comprend un premier bit, noté Spl/Cps, suivi d'une série de bits notée S-P2.

Le premier bit Spl/Cps qui est un marqueur indiquant s'il s'agit d'un évènement simple ou composite est mis à une valeur représentative d'un évènement simple. Il est inutile si l'on gère uniquement des évènements simples.

La série de bits S-P2 est le codage en puissances de deux de l'identificateur de l'évènement permettant par exemple de connaître son état de validation par lecture dans le registre d'état de sécurité de la carte.

Si la série S-P2 comporte 4 bits, 16 évènements simples sont possibles : l'évènement simple dont l'identificateur est la valeur numérique "3", noté Evt₃, étant alors codé sous la forme [0 - 0 0 1 1], et l'évènement simple dont l'identificateur est la valeur "6", noté Evt₆, étant alors codé sous la forme [0 - 0 1 1 0].

La structure d'un mot binaire Mot_Evt_Cps définissant un évènement composite est représentée schématiquement en figure 3. Ce mot binaire comprend un premier bit noté Spl/Cps suivi d'un second bit noté OU/ET, lui-même suivi par une série de bits notée S-Rg.

Le bit Spl/Cps qui est un marqueur indiquant s'il s'agit d'un évènement simple ou composite est mis à une valeur représentative d'un évènement composite. Le second bit noté ET/OU est un marqueur indiquant si l'évènement composite est la conjonction ou la disjonction de plusieurs évènements.

La série de bits S-Rg définit les évènements constitutifs de l'évènement composite, qui y sont codés par rangs et non pas par puissances de deux : dans cette série le rang de chaque bit ayant la valeur 1 fait référence à l'évènement ayant le même rang dans la liste d'évènements List_Evt.

Cette solution de codage par rang permet de réduire significativement la longueur du mot Mot_Evt_Cps : un évènement composite peut être constitué d'un nombre d'évènements correspondant simplement à la longueur de la série S-Rg.

Ainsi, pour une taille de liste d'évènements de 6, c'est-à-dire si N vaut 6, l'évènement composite "Evt₁ OU Evt₂ OU Evt₃" est codé par le mot binaire [1 - 0 - 0 0 0 1 1 1].

Dans le mot ci-dessus, le premier bit Spl/Cps est à 1 pour spécifier que l'évènement est composite, le second bit ET/OU qui est à 0 signifie qu'il s'agit de la combinaison logique "OU", et les trois bits suivants sont à 1 pour indiquer qu'il s'agit de la combinaison des évènements de rangs 1, 2 et 3 dans la liste d'évènements List_Evt.

De manière analogue, l'évènement composite "Evt₄ ET Evt₅" est codé par le mot [1 - 1 - 0 1 1 0 0 0].

Chaque évènement composite est la conjonction ou la disjonction de plusieurs évènements de la liste d'évènements List_Evt, de sorte qu'un évènement composite peut être constitué d'évènements eux même composites. Ceci permet d'établir des combinaisons logiques complexes, c'est-à-dire faisant intervenir la conjonction et la disjonction.

Dans ce cadre, l'exemple ci-dessous illustre le codage de l'évènement composite "(Evt₁ OU Evt₂) ET Evt₃" :
La liste d'évènements est alors codée sur 34 bits

| | | |
|---|---|---|
| [N=5] | [1 0 1] | 3 bits |
| [Evt1] | [0 - 0 0 0 1] | 5 bits |
| [Evt2] | [0 - 0 0 1 0] | 5 bits |
| [Evt3] | [0 - 0 0 1 1] | 5 bits |
| [Evt4 = Evt1 OU Evt2] | [1 - 0 - 0 0 0 0 1 1] | 8 bits |
| [Evt4 ET Evt3] | [1 - 1 - 0 0 1 1 0 0] | 8 bits |

Comme dans le cas de la gestion d'évènements simples, la gestion des droits d'accès d'un système comprenant des évènements composites est assurée en se référant au registre d'état de sécurité de la carte.

A réception d'une requête en exécution d'une commande C sur un ensemble de données, l'accord ou le refus d'exécuter cette commande est décidé en recherchant la commande C dans la liste de commande List_Cmd relative à l'ensemble de données visé. Si la recherche est infructueuse, la commande C n'est pas exécutée.

Si la recherche est fructueuse, la commande est exécutée lorsque l'évènement associé à la commande C dans la liste List_Cmd est valide.

S'il s'agit d'un évènement simple, on détermine par lecture du registre d'état de sécurité de la carte si cet évènement est ou non valide pour autoriser ou non l'exécution de la commande.

S'il s'agit d'un événement composite, la combinaison logique le définissant est identifiée à partir de la liste d'évènements List_Evt à laquelle renvoie la liste de commandes List_Cmd. Puis on détermine à partir d'une lecture du registre d'état de sécurité de la carte si cette combinaison logique est ou non vérifiée pour autoriser ou refuser l'exécution de la commande.

Le format d'enregistrement des droits d'accès est ainsi modulable en fonction des besoins, car la taille et la présence de chaque élément peut être définie au plus juste pour chaque cas d'utilisation, c'est-à-dire pour chaque application de carte à puce.

Les paramètres à faire varier sont le nombre maximum de commandes existantes, noté N_{CMD} ; le nombre maximum d'évènements possibles, noté N_{EVT} ; et le nombre maximum d'évènements pouvant apparaître dans la liste d'événements, noté N_{DAC}.

Pour gérer des droits très simples, n'impliquant que les commandes de lecture (READ) et d'écriture (WRITE) et ne faisant intervenir que les événements simples suivants : "toujours", noté [ALL] ; "jamais", noté [NEV] ; "vérification du code PIN", notée [PIN] ; "établissement d'un canal sécurisé", noté [SM], le système peut être paramétré avec les valeurs suivantes :
N_{CMD} = 2 : les commandes sont donc codées sur 1 seul bit : [READ] = 0 et [WRITE] = 1.
N_{DAC} = 0 : comme il y a uniquement des évènements simples, la liste List_Evt et le bit Spl/Cps ne sont pas nécessaires.
N_{EVT} = 4 : les évènements simples sont codés sur une série S-P2 comprenant deux bits : [ALL] = 0 0 ; [PIN] = 0 1 ; [SM] = 1 0 ; [NEV] = 1 1.

Pour un droit d'accès correspondant à une lecture autorisée tout le temps, et à une écriture autorisée seulement lorsque le code PIN est vérifié, le codage peut être effectué sur seulement 6 bits, comme illustré ci-dessous :

| | | |
|---|---|---|
| [READ] | [0] | 1 bit |
| [ALL] | [0 0] | 2 bits |
| [WRITE] | [1] | 1 bit |
| [PIN] | [0 1] | 2 bits |

A l'opposée, pour un système très ouvert, on peut prendre les valeurs suivantes :
N_{CMD} = 64 : les commandes sont alors codées sur 6 bits.
N_{EVT} = 128 les événements simples sont codés sur 8 bits comprenant le bit Spl/Cps et 7 bits correspondant à la série S-P2 dédiée à leurs identificateurs codés en puissances de deux.
N_{DAC} = 8 : les évènements composites sont codés sur 10 bits comprenant le bit Spl/Cps, le bit OU/ET, et 8 bits correspondant à la série S-Rg.

Chaque évènement composite peut ainsi être une combinaison de un à huit évènements pris dans les 8 premiers évènements de la liste List_Evt.

Ainsi, chaque élément de la liste de commandes, c'est-à-dire chaque couple représentatif d'une commande et de l'évènement associé à celle-ci est alors codé sur 14 bits pour un événement simple et 16 bits pour un composite.

Avec ces paramètres, l'exemple suivant décrit les droits d'accès pour les conditions suivants la lecture est autorisée si le code PIN1 a été vérifié ; l'écriture est autorisée lorsque le code PIN2 a été vérifié ET qu'un canal sécurisé est établi ; l'effacement est autorisé si le code PIN3 a été vérifié OU si un canal sécurisé a été établi :

| | | |
|---|---|---|
| [N=4] | [0 1 0 0] | 4 bits |
| [SM] | [0 - 0 0 0 1 1 1 1] | 8 bits |
| [PIN2] | [0 - 0 0 0 0 0 1 0] | 8 bits |
| [PIN3] | [0 - 0 0 0 0 0 1 1] | 8 bits |
| | | |
| [READ] | [0 0 0 0 0 1] | 6 bits |
| [PIN1] | [0 - 0 0 0 0 0 0 1] | 8 bits |
| | | |
| [WRITE] | [0 0 0 0 1 0] | 6 bits |
| [PIN2 ET SM] | [1 - 1 - 0 0 0 0 0 0 1 1] | 10 bits |
| | | |
| [DELETE] | [0 0 0 0 1 1] | 6 bits |
| [PIN3 OU SM] | [1 - 0 - 0 0 0 0 0 1 0 1] | 10 bits |

Ainsi, l'ensemble des droits d'accès relatifs à ces données ou ce fichier est codé sur seulement 74 bits.

L'algorithme implémenté par le programme d'évaluation des droits d'accès retourne la valeur "VRAI" si les conditions nécessaires sont remplies pour accéder au fichier, et il retourne la valeur "FAUX" sinon.

Pour déterminer si l'accès doit être autorisé ou refusé, le programme identifie d'abord la commande qui est demandée, notée C, ainsi que l'état de sécurité de la carte noté {Evtₐ, Evt_{b}, ... Evtₓ}.

Dans un premier temps, si une liste d'événements est présente, c'est-à-dire si N_{DAC} ne vaut pas 0, le programme identifie les évènements simples apparaissant dans la liste List_Evt, qui sont aussi présents dans l'état de sécurité de la carte { Evtₐ, Evt_{b}, ... Evtₓ}.

En d'autres termes, il détermine quels sont les évènements simples de la liste des droits d'accès qui sont effectivement validés par l'état de sécurité de la carte, et il enregistre cet état.

Ensuite, pour chaque évènement composite présent dans la liste d'évènements si elle en comporte, le programme vérifie s'il est valide ou non en fonction de l'état des évènements enregistrés ci-dessus, et il enregistre également cet état.

La liste d'évènements est ordonnée de la manière suivante : les évènements simples en premier, suivis éventuellement d'évènements composites agencés de telle manière que les évènements auxquels ils font référence les précèdent dans la liste. Grâce à cet ordre, le droit d'accès peut être évalué en une seule passe, sans récursivité.

Le programme recherche ensuite la commande C dans la liste des commandes, et si la commande C est absente de cette liste, il retourne la valeur "FAUX", du fait que par convention l'absence de la commande recherchée correspond à la condition "jamais".

Lorsque la commande C est présente dans la liste, le programme évalue la validité de l'évènement qui lui est associé, qui est l'évènement apparaissant dans le couple contenant la commande C.

S'il s'agit d'un évènement simple, son état de validité peut être déterminé par lecture directe dans l'état de sécurité de la carte. S'il s'agit d'un évènement composite, son état de validité est déterminé à partir des états enregistrés à l'issue de la première étape.

Le programme retourne ensuite la valeur "VRAI" ou "FAUX" selon que l'évènement associé à la commande est valide ou non valide.

Pour optimiser la recherche de la commande, on peut jouer sur les paramètres N_{CMD}, N_{EVT}, N_{DAC} pour que tous les éléments soient enregistrés sur des octets complets. On peut également imposer que les évènements simples et composites aient la même taille.

## Revendications

1. Procédé de gestion des droits d'accès associés à des données d'une carte à puce, pour subordonner l'exécution d'une commande (Cmd₁ .. Cmdₖ) telle qu'une commande de lecture de ces données, à la validation d'une combinaison logique de plusieurs évènements (Evt₁'..Evtₖ') détectés par la carte, tels qu'une authentification par vérification d'un code,
dans lequel l'état de validation de chaque évènement (Evt₁.. Evt_{N}) est tenu à jour dans un registre d'état de sécurité de la carte ({ Evtₐ, Evt_{b}, ... Evtₓ}) ;
dans lequel les droits d'accès d'un ensemble de données sont enregistrés dans une liste des commandes (List_Cmd) à laquelle est associée une liste d'évènements (List_Evt) donnant pour chaque événement qu'elle comporte un identificateur de cet évènement,
la liste de commande étant formée de couples (Cpl₁..Cplₖ) associant chacun une commande (Cmd₁..Cmdₖ) à une combinaison logique d'évènements à valider qui est définie par les rangs dans la liste d'évènements (List_Evt) de chacun des évènements composant cette combinaison ;
dans lequel à réception d'une requête d'exécution d'une commande (C) sur un ensemble de données, l'autorisation ou le refus d'exécuter cette commande est établi :
- en recherchant dans la liste des commandes (List_Cmd) associée à ces données, le couple (Cpl₁..Cplₖ) comprenant la commande requise (C) et en refusant l'exécution en cas de recherche infructueuse ;
- et en cas de recherche fructueuse, en déterminant, à partir du registre d'état de sécurité de la carte si la combinaison d'évènements (Evt₁'..Evtₖ') associée à la commande (C) est ou non validée pour autoriser ou refuser l'exécution de la commande (C).

2. Procédé selon la revendication 1, dans lequel chaque commande (Cmd₁.. Cmdₖ) enregistrée dans la liste de commandes (List_Cmd) est codée sous forme d'un mot binaire représentatif d'un identificateur de cette commande (Cmd₁..Cmdₖ).

3. Procédé selon la revendication 1 ou 2, dans lequel la liste d'évènements (List_Evt) comporte aussi une ou plusieurs combinaisons d'évènements, chaque combinaison y étant définie par les rangs dans la liste d'événements (List_Evt) de chacun des évènements composant cette combinaison, cette liste étant ordonnée de telle manière que chaque combinaison logique d'évènements est située après les évènements qui la composent.

4. Procédé selon l'une des revendications 1 à 3,
dans lequel la liste d'évènements (List_Evt) débute par un mot binaire représentatif du nombre (N_{DAC}) d'évènements et de combinaisons d'évènements que cette liste comporte.

5. Procédé selon l'une des revendications 1 à 4,
dans lequel chaque événement ou combinaison d'évènements (Evt₁..Evtₖ) enregistré dans une liste est codé sous forme d'un mot binaire débutant par un premier indicateur binaire (Spl/Cps) indiquant s'il s'agit d'un évènement ou d'une combinaison logique d'évènements.

6. Procédé selon la revendication 5, dans lequel chaque mot binaire correspondant à un évènement (Mot_Evt_Spl) comprend l'identificateur de cet évènement codé en fin de mot (S-P2).

7. Procédé selon la revendication 5 ou 6, dans lequel chaque mot correspondant à une combinaison logique d'évènements (Mot_Evt_Cps) comprend une série d'indicateurs binaires située en fin de mot (S-Rg), dans laquelle chaque indicateur binaire valant "UN" indique que l'évènement ayant dans la liste d'évènements (List_Evt) le rang qu'a cet indicateur dans la série (S-Rg) fait partie de cette combinaison logique d'évènements.

8. Procédé selon l'une des revendications 5 à 7,
dans lequel le second indicateur binaire (OU/ET) de chaque mot correspondant à une combinaison logique d'évènements (Mot_Evt_Cps) indique s'il s'agit d'une combinaison logique conjonctive ou bien disjonctive.

9. Carte à puce comprenant des moyens de mise en oeuvre du procédé selon l'une des revendications 1 à 8.

## Patentansprüche

1. Verfahren zum Verwaltet von Zugriffsrechten, die mit Daten einer Chipkarte verknüpft sind, um das Ausführen eines Befehls (Cmd₁..Cmdₖ), wie z. B. ein Befehl zum Leisen dieser Daten, der Validierung einer logischen Kombination von mehreren Ereignissen (Evtl'..Evtk'), die von der Karte erfasst werden, wie z. B. eine Authentifizierung durch Verifizierung eines Codes, unterzuordnen,
bei dem der Validierungszustand jedes Ereignisses (Evt₁..Evt_{N}) in einem Sicherheitszustandsregister der Karte ({Evtₐ, Evt_{b}, ... Evtₓ}) aktuell gehalten wird;
bei dem die Zugriffsrechte auf einen Datensatz in einer Befehisliste (List_Cmd) gespeichert sind, mit der eine Ereignisliste (List_Evt) verknüpft ist, die für jedes Ereignis, das sie enthält, einen Identifikator für dieses Ereignis angibt,
wobei die Befehlsliste aus Paaren (Cpl₁..Cplₖ) gebildet ist, die jeweils einen Befehl (Cmd₁..Cmdₖ) mit einer zu validierenden logischen Kombination von Ereignissen verknüpften, die durch den Rang jedes der diese Kombination bildenden Ereignisse in der Ereignisliste (List_Evt) definiert ist;
bei dem beim Empfang einer Anforderung zum Ausführen eines Befehls (C) an einem Datensatz die Autorisierung oder die Verweigerung der Ausführung dieses Befehls festgelegt wird:
indem in der Befehlsliste (List_Cmd), die mit diesen Daten verknüpft ist, das Paar (Cpl₁-Cplₖ), das den angeforderten Befehl (C) umfasst, gesucht und im Falle einer erfolglosen Suche die Ausführung verweigert wird; - und indem im Falle einer erfolgreichen Suche anhand des Sicherheitszustandsregisters der Karte bestimmt wird, ob die Kombination von Ereignissen (Evt₁'.. Evtₖ'), die mit dem Befehl (C) verknüpft ist, validiert ist oder nicht, um die Ausführung des Befehls (C) zu autorisieren oder zu verweigern.

2. Verfahren nach Anspruch 1, bei dem jeder Befehl (Cmd₁..Cmdₖ), der in der Befehlsliste (List_Cmd) gespeichert ist, in Form eines binären Wortes, das repräsentativ für einen Identifikator dieses Befehls (Cmd₁..Cmdₖ) ist, kodiert ist.

3. Verfahren nach Anspruch 1 oder 2, bei dem die Ereignisliste (List_Evt) ferner eine oder mehrere Ereigniskombinationen umfasst, wobei jede Kombination darin durch den Rang jedes der diese Kombination bildenden Ereignisse in der Ereignisliste definiert ist, wobei diese Liste derart geordnet ist, dass sich jede logische Kombination von Ereignissen nach den Ereignisse befindet, die diese bilden.

4. Verfahren nach einem der Ansprüche 1 bis 3, bei dem die Ereignisliste (List_Evt) mit einem binären Wort beginnt, das repräsentativ für die Anzahl (N_{DAC}) von Ereignissen oder Ereigniskombinationen ist, die diese Liste enthält.

5. Verfahren nach einem der Ansprüche 1 bis 4, bei dem jedes Ereignis oder jede Kombination von Ereignissen (Evt₁..Evtₖ), das bzw. die in einer Liste gespeichert ist, in Form eines binären Wortes kodiert ist, das mit einem ersten binären Indikator (Spl/Cps) beginnt, der anzeigt, ob es sich um ein Ereignis oder eine logische Kombination von Ereignissen handelt.

6. Verfahren nach Anspruch 5, bei dem jedes binäre Wort, das einem Ereignis (Mot_Evt_Spl) entspricht, den Identifikator für dieses Ereignis kodiert am Ende des Wortes (S-P2) umfasst.

7. Verfahren nach Anspruch 5 oder 6, bei dem jedes Wort, das einer logischen Kombination von Ereignissen (Mot_Evt_Cps) entspricht, eine sich am Wortende (S-Rg) befindende Reihe von binären Indikatoren umfasst, in der jeder binäre Indikator mit dem Wert "EINS" anzeigt, dass das Ereignis, das in der Ereignisliste (List_Evt) den Rang hat, den dieser Indikator in der Reihe (S-Rg) hat, zu dieser logischen Kombination von Ereignissen gehört.

8. Verfahren nach einem der Ansprüche 5 bis 7, bei dem der zweite binäre Indikator (ODER/UND) jedes Wortes, das einer logischen Kombination von Ereignissen (Mot_Evt_Cps) entspricht, anzeigt, ob es sich um eine konjunktive oder disjunktive logische Kombination handelt.

9. Chipkarte, umfassend Mittel zum Durchführen des Verfahrens nach einem der Ansprüche 1 bis 8.

## Claims

1. A method of managing access rights associated with smart card data so as to subordinate execution of a command (Cmd₁, ... , Cmdₖ) such as a command to read said data, to a logical combination of a plurality of events (Evt₁', ..., Evtₖ') detected by the card being valid, such as authentication by verifying a code;
wherein the validation state of each event (Evt₁, ..., Evt_{N}) is kept up to date in a security state register of the card ({ Evtₐ, Evt_{b}, ... , Evtₓ});
wherein the access rights to a data set are stored in a command list (List Cmd) that is associated with an event list (List_Evt) that gives, for each event it includes, an identifier for that event;
the command list being made up of couples (Cpl₁, ..., Cplₖ), each associating a command (Cmd₁, ... , Cmdₖ) with a logical combination of events that must be valid, which combination is defined by the rank in the event list (List_Evt) of each of the events making up said combination;
wherein on receiving a request to execute a command (C) on a data set, the authorization or refusal to execute said command is established:
• by searching in the command list (List_Cmd) associated with said data for the couple (Cpl₁, ..., Cplₖ) including the requested command (C), and refusing execution if the search is unsuccessful; and
• if the search is successful, by determining from a security state register of the card whether the combination of events (Evt₁', ..., Evtₖ') associated with the command (C) is or is not valid in order to authorize or refuse execution of the command (C).

2. A method according to claim 1, wherein each command (Cmd₁, ..., Cmdₖ) stored in the command list (List_Cmd) is coded in the form of a binary word representative of an identifier of the command (Cmd₁, ..., Cmdₖ).

3. A method according to claim 1 or claim 2, wherein the event list (List_Evt) also includes one or more event combinations, each combination being defined therein by the rank in the event list (List_Evt) of each of the events making up said combination, said list being ordered in such a manner that each logical combination of events is situated after the events that make it up.

4. A method according to any one of claims 1 to 3,
wherein the event list (List_Evt) begins by a binary word representative of the number (N_{DAC}) of events and combinations of events contained in said list.

5. A method according to any one of claims 1 to 4,
wherein each event or event combination (Evt₁, ..., Evtₖ) stored in a list is coded in the form of a binary word beginning with a first binary flag (Spl/Cps) indicating whether it relates to an event or a logical combination of events.

6. A method according to claim 5, wherein each binary word corresponding to an event (Mot_Evt_Spl) includes the identifier of said event coded at the end of the word (S-P2).

7. A method according to claim 5 or claim 6, wherein each word corresponding to a logical combination of events (Mot_Evt_Cps) comprises a series of binary flags situated at the end of the word (S-Rg), in which each binary flag of value "ONE" indicates that the event having, in the event list (List_Evt), the same rank as said flag in the series (S-Rg) forms part of said logical combination of events.

8. A method according to any one of claims 5 to 7,
wherein the second binary flag (OR/AND) of each word corresponding to a logical combination of events (Mot_Evt_Cps) indicates whether it relates to a conjunctive or to a disjunctive logical combination.

9. A smart card including means for implementing the method according to any one of claims 1 to 8.
